Europäisches Patentamt

European Patent Office

Office européen des brevets

(19)

(11) Veröffentlichungsnummer: **0 110 415**
**B1**

(12) # EUROPÄISCHE PATENTSCHRIFT

(45) Veröffentlichungstag der Patentschrift:
11.06.86

(21) Anmeldenummer: 83112103.3

(22) Anmeldetag: 01.12.83

(51) Int. Cl.⁴: **B 62 D 7/14,** B 62 D 21/18,
B 62 D 49/02, B 62 D 49/06,
B 60 K 17/30

(54) Klein-Arbeitsfahrzeug.

(30) Priorität: 06.12.82 DE 3245085

(43) Veröffentlichungstag der Anmeldung:
13.06.84 Patentblatt 84/24

(45) Bekanntmachung des Hinweises auf die Patenterteilung:
11.06.86 Patentblatt 86/24

(84) Benannte Vertragsstaaten:
BE CH DE FR GB IT LI SE

(56) Entgegenhaltungen:
WO - A - 79/00561
DE - A - 2 905 528
FR - A - 2 127 461
FR - A - 2 238 349
FR - A - 2 347 250
FR - A - 2 472 905
FR - A - 2 505 285
GB - A - 1 595 392
US - A - 3 154 164
US - A - 3 179 194
US - A - 3 306 390
US - A - 3 677 572

(73) Patentinhaber: Kramer-Werke GmbH, D-7770 Überlingen
(DE)

(72) Erfinder: Friedrich, Karl, Gräfin-Hildegard-Strasse 17,
D-7776 Sipplingen (DE)

(74) Vertreter: Grättinger, Günter et al, Patentanwalt
Almeidaweg 35 Postfach 16 49, D-8130 Starnberg (DE)

LIBER, STOCKHOLM 1986

## Beschreibung

Die Erfindung bezieht sich auf ein Arbeitsfahrzeug nach dem Oberbegriff des Anspruchs 1, das mit einem Arbeitsgerät bestückt ist oder bestückt werden kann, insbesondere als Kleinlader mit einer Ladeschaufel, aber gegebenenfalls auch mit einem Baggergeschirr, einem Schneeräumschild oder einem sonstigen Arbeitsgerät.

Die entsprechenden Arbeiten müssen häufig unter sehr beengten Raumverhältnissen durchgeführt werden, beispielsweise an Straßenbaustellen in engen Gassen, bei Ladearbeiten auf Schiffen oder bei Bau- und Montagetätigkeiten in Hallen. Für derartige Baustellen sind als Wendige Klein-Lader unter der Handelsbezeichnung "Bobcat" bekanntgewordene antriebsgelenkte Fahrzeuge im Einsatz, bei denen zur Lenkung die Räder einer Seite abgebremst oder sogar gegenläufig zur anderen Seite angetrieben werden, wodurch sich sehr kleine Wenderadien ergeben. Nachteilig ist jedoch hierbei ein hoher Reifenverschleiß, eine erhebliche Beanspruchung oder Durchwühlung des Untergrunds und ein sehr schlechtes Fahrverhalten des Geräts. Das letztere ergibt sich aus dem erforderlichen kurzen Radabstand. Zur Verkürzung des Fahrzeugs ist weiterhin die Ladeanlage beiderseits am hinteren Fahrzeugende angelenkt und seitlich nach vorn geführt, was hinsichtlich Einstieg, Sichtverhältnissen und Kippverhalten ungünstig ist. Eün weiterer großer Nachteil ist die geringe Bodenfreiheit des Geräts.

Andererseits führt auch der Bau sehr kleiner wendiger Arbeitsfahrzeuge mit Lenktriebachsen zu erheblichen Schwierigkeiten, da diese normalerweise nur einen maximalen Lenkeinschlag des kurveninneren Rads von ca. 40° erlauben. Es sind allerdings auch bereits Lenktriebachsen mit einem maximalen Lenkeinschlag von 60° gebaut worden. Größere Lenkeinschläge sind indessen, bedingt durch die Konstruktion der Doppelgelenkwellen, bei über Wellen angetriebenen Rädern nicht verwirklicht worden.

Es ist auch ein Arbeitsfahrzeug der eingangs genannten Art bekannt (DE-A-29 02 446), bei dem sämtliche vier Räder angetrieben und einzeln über vertikale Radstützen aufgehängt sind. Die Antriebswelle ist in diesem Fall innerhalb einer als Hohlwelle ausgebildeten Lenkwelle angeordnet und die Abstützung des Radlagers sowie ein Antriebsgetriebe zur Umlenkung des Antriebs von der vertikalen Antriebswelle zur horizontalen Fahrwelle sind neben dem jeweiligen Rad in dessen Axialbereich angeordnet. Dieses bekannte Fahrzeug, das als Niedrigleistung- und Leichtfahrzeug vorgesehen ist, hat indessen durch die neben dem Rad befindlichen Bauteile eine erheblich beeinträchtigte Bodenfreiheit, die insbesondere bei Arbeiten im Gelände ständige Berücksichtigung erfordert. Außerdem ist das System des bekannten Fahrzeugs kaum für Arbeitsgeräte höherer Leistung wie Schaufellader oder dergleichen verwendbar.

Im Bemühen, allseitig lenkbare Arbeitsfahrzeuge zu konstruieren, ist auch die Idee bekannt geworden (DE-U-80 31 892), die Räder eines Gabelstaplers ähnlich wie die eines Portalkrans an Radbeinen aufzuhängen, die in der Verlängerung des vertikalen Raddurchmessers am Rahmen gelagert sind und eine beliebige Verschwenkungsstellung einnehmen können. An der Radnabe sitzt ein Hydraulikmotor oder Elektromotor für den Antrieb. Zur Lenkung werden die Radbeine über Kegelradtriebe verdreht. Diese bekannte Bauart führt, da der gesamte Fahrzeugkörper erst oberhalb des Niveaus der Radoberseite beginnt, zu einem relativ hohen Fahrzeug mit entsprechend hohem Schwerpunkt, wodurch die Stabilität insbesondere beim Heben schwerer Lasten beeinträchtigt ist.

Zur Verbesserung der Fahrzeugkonstruktion, insbesondere der Stabilität und der Einstiegsbedingungen, ist es auch bekannt (DE-A-29 05 528), Teile des Rahmens portalartig über die Räder zu führen. Der bekannte Rahmen weist einen die Portale aufweisenden Außenrahmen und einen tieferliegenden Innenrahmen auf, der den Lenkeinschlag begrenzt. Für ein Klein-Arbeitsfahrzeug mit optimaler Wendigkeit genügt diese Maßnahme der Rahmengestaltung nicht.

Der Erfindung liegt die Aufgabe zugrunde, ein kompaktes Arbeitsfahrzeug zu schaffen, das aufgrund der Ausbildung seines Fahrzeugrahmens Stabilität hinsichtlich Stand, Lenk- und Fahrverahlten aufweist.

Diese Aufgabe wird durch die im Anspruch 1 gekennzeichnete Erfindung gelöst. Die Kombination des Portalrahmens, der über die Räder verläuft, mit der portalartigen Achse, deren vorzugsweise quer zur Fahrtrichtung verlaufende Achskörper etwa im Höhenbereich des oberen Reifenbereichs der Räder verläuft, ergibt bei einem insgesamt relativ niedrigen Fahrzeugaufbau zugleich die Möglichkeit eines sehr hohen Lenkeinschlags und eine große Bodenfreiheit zwischen den Rädern, so daß das Fahrzeug universell für das Arbeiten auf beengtem Raum eingesetzt werden kann, also auch bei empfindlichem Untergrund oder starken Seitenkräften.

Die Maßnahme nach Anspruch 2 dient der weiteren Verbesserung der Bodenfreiheit, wobei ein Getriebe mit hoher drehzahlvermindernder Übersetzung in der Radfelge angeordnet sein kann. Die Maßnahme nach Anspruch 3 trägt noch weiter zur Verminderung des Reifenradierens bei, mit vorteilhaften Folgen hinsichtlich Reifenlebensdauer und Schonung des Untergrunds. Ein gewisser positiver oder negativer Lenkrollradius, der vorzugsweise innerhalb der Reifenaufstandsfläche verbleibt, kann indessen hingenommen werden. Aus diesem Lenkrollradius und den Bemessungen nach Anspruch 4 ergibt sich die Begrenzung des Lenkeinschlags durch den Achskörper, die so gehalten werden kann, daß das Rad um 180° oder auch geringfügig darüber verschwenkt werden kann.

Die Maßnahme nach Anspruch 5 trägt weiterhin zur Verminderung des Radierens bei, da auch bei engen Wendekreisen die Räder abrollen. Die Programmierung kann beispielsweise elektronisch oder in bekannter Weise mittels Kurvenscheiben (DE-A- 24 41 995) oder unter Inkaufnahme eines gewissen Lenkfehlers mit Hilfe kinematischer Systeme durchgeführt werden.

Die Spreizung und der Sturz führen bei einer Radverschwenkung zu einer gewissen Schrägstellung des Rads, die zur Unterbringung des Achskörpers im Zwickel zwischen den Radendstellungen ausgenützt wird. Zum Lenkantrieb um 180° sind die Maßnahmen nach den Ansprüchen 5 bis 12 zweckmäßig. Die Maßnahme nach Anspruch 8 dient hierbei dazu, eine Querfahrt in einer um 90° gegenüber der Geradeausfahrt versetzten Drehrichtung dadurch zu ermöglichen, daß in der Endstellung eine Umschaltung zweier Räder um 180° möglich ist. Bei einer Verschwenkung der Räder zur Erzielung immer kleinerer Drehradien bis zur völligen Querstellung aus der Kreislenkung heraus ergibt sich die Konstellation, daß beispielsweise die Vorderräder nach links, die Hinterräder aber nach rechts antreiben. Soll nun auf Seitenversatz geschaltet werden, so müssen entweder eines dieser Räderpaare über ein Wendegetriebe umgekehrt angetrieben werden oder eines der Räderpaare wiederum um 180° verstellt werden, welch letzterer Maßnahme die Konstruktion nach Anspruch 8 dient.

Bei einer anderen Programmierung der Lenkung kann es aber auch ermöglicht werden, Schrägfahrten nicht nur in 90°-Richtung, sondern in jeder beliebigen Schrägrichtung einzusteuern. Beispielsweise können die Lenkhebel nach den Ansprüchen 10 bis 12 über wahlweise Spurstangen miteinander verbunden sein, die die unterschiedlichen Querbewegungskomponenten der überstrichenen Kreisbögen der Spurstangen-Anlenkpunkte an den Hebel ausnützen, um durch unterschiedliche kinematische Kopplungen unterschiedliche Lenkverhalten zu erzielen. Die Antriebsrichtungen müssen für Räderparallelstellung stets gleichgerichtet sein. Lenkverdrehungsübersetzungen nach Anspruch 11 sind an sich bekannt (z.B. DE-A- 23 49 177).

Wie erläutert, ermöglicht das erfindungsgemäße Konzept die Konstruktion eines Arbeitsfahrzeugs, das nicht nur überaus wendig, sondern auch von sehr stabilem Steh- und Fahrverhalten ist. So wird durch die Achsschenkellenkung ein Radabstand möglich, der wenigstens das 1,5-fache, beispielsweise bei einer tatsächlich ausgeführten Konstruktion das mehr als 1,8-fache des Raddurchmessers beträgt. Dieser große Radabstand in Verbindung mit dem Portalrahmen ermöglicht auch den seitlichen Einstieg. Nach Anspruch 13 soll hierbei der Raum unterhalb der Achskörper, also seitlich begrenzt durch die schräg in die Radfelgenschüsseln verlaufenden Radstützen, frei bleiben. Allenfalls können noch an der Unterseite des Achskörpers Lenkhebelteile montiert sein. Dieser Raum wird im Bereich der Achsen durch den Schwenkbereich der Räder in Anspruch genommen. Durch die gewählte Höhe der Achskörper einerseits und den freien Raum darunter andererseits wird eine gute Kombination von niedrigem Schwerpunkt und Bodenfreiheit erzielt. Hierzu trägt auch der zwischen den Rädern heruntergezogene Portalrahmen bei.

Die Maßnahme nach Anspruch 14 ergibt eine gute gegenseitige Abstimmung zwischen der Radgröße und der Fahrzeuggröße, wobei die durch die Lenkprogrammierung und Raddimensionierung ermöglichten Maßnahmen nach den Ansprüchen 15 und 16 sogar einen sehr großen Raddurchmesser ermöglichen.

Die Maßnahmen nach den Ansprüchen 17 und 18 führen schließlich dazu, daß das Kleinfahrzeug die Voraussetzungen für ein präzises Arbeiten auf kleinstem Raum bietet. Sofern es sich beim Arbeitsgerät um eine Ladeschaufel handelt, kann der Fahrer die Schaufelschneide von seinem Fahrerplatz aus sehen, so daß er die Wendigkeit des Fahrzeugs zum präzisen Arbeiten zwischen Hindernissen oder dergleichen ausnützen kann.

Weitere Einzelheiten, Vorteile und Weiterbildungen der Erfindung ergeben sich aus der folgenden Beschreibung bevorzugter Ausführungsbeispiele unter Bezugnahme auf die Zeichnung. Es zeigen:

Fig. 1 in Seitenansicht schematisch ein Arbeitsfahrzeug, nämlich einen Kleinlader von kompakter Konstruktion und großer Wendigkeit;

Fig. 2 einen schematischen Querschnitt durch die Antriebsräder in Geradeausstellung und im maximalen Lenkeinschlagsbereich;

Fig. 3 schematische Grundrisse von Lenkkonstellationen;

Fig. 4 eine perspektivische Ansicht des Portalrahmens des Arbeitsfahrzeugs nach Fig. 1;

Fig. 5 eine teilweise geschnittene Vorderansicht einer Achse des Arbeitsfahrzeugs;

Fig. 6 eine Seitenansicht der Achse mit Darstellung des Rades in seinen beiden extremen Lenkstellungen;

Fig. 7 einen Vertikalschnitt durch ein Rad mit Radstütze einer abgewandelten Konstruktion;

Fig. 8 eine Seitenansicht der Achse mit Radstütze nach Fig. 7 mit dem Rad in Schnittdarstellung in den beiden extremen Lenkstellungen;

Fig. 9 einen Schnitt entsprechend Fig. 7 einer abgewandelten Ausführung;

Fig. 10 eine Vorderansicht eines Kegelradgetriebes in der Ausführung nach Fig. 9.

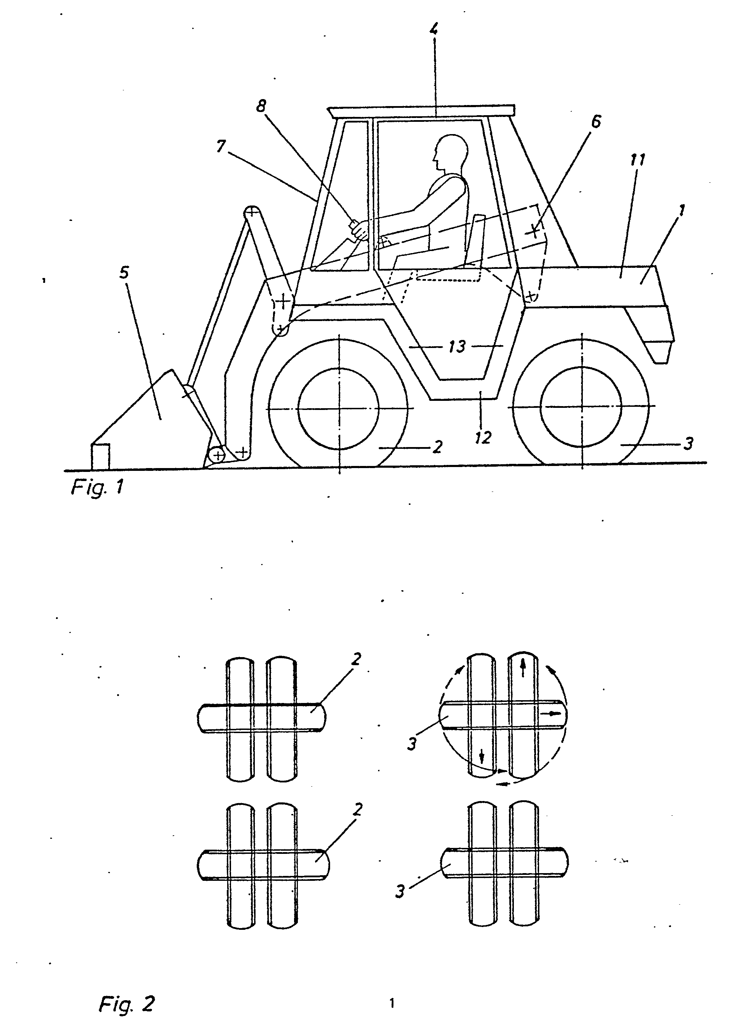

Fig. 1 zeigt ein erfindungsgemäßes Arbeitsfahrzeug in Form eines Klein-Schaufelladers, mit einem Fahrzeugrahmen 1 in Form eines Portalrahmens, Vorderrädern 2, Hinterrädern 3, einem Fahrerhaus 4 und einem an einem Ausleger sitzenden Arbeitsgerät in Form einer Ladeschaufel 5. Das Arbeitsfahrzeug ist sehr kompakt und überaus wendig. Als mittlere Größenordnung einer Serie des beschriebenen Ausführungsbeispiels seien beispielhaft angegeben: Eine Gesamthöhe von 2000 bis 2300mm, Gesamtlänge ohne Arbeitsgerät 2300 bis 2800mm, Raddurchmesser mit Reifen 800 bis 900mm, Spurweite 1000 bis 1200mm. Die Schaufel 5 ist über einen Ausleger an einem hinter dem Fahrerhaus befindlichen Anlenkpunkt 6 an einer Seite des Fahrzeugs angelenkt, der Ausleger versperrt also nicht einen seitlichen Ein- und Ausstieg des Fahrers in das Fahrerhaus 4 auf der anderen Seite. Der Fahrer hat durch eine weit heruntergezogene Frontscheibe 7 Sicht auf die unmittelbare Arbeitsstelle vor ihm, im Fall der Ladeschaufel 5 als Arbeitsgerät kann er deren Schneide von seinem Sitzplatz aus sehen. Hierzu ist der Sitzplatz relativ weit vorne angebracht, und als Steuerhandhabe dient eine wenig Grundfläche beanspruchende Lenkstange 8. Die Räder 2 und 3 sind in größtmöglichem Abstand voneinander an den extremen Rahmenenden angeordnet, so daß das Fahrzeug ein stabiles Fahrverhalten und eine hohe Kippfestigkeit zeigt. Dabei hat das Fahrzeug eine sehr erhebliche Bodenfreiheit, die seinen Einsatz im Gelände begünstigt.

Die hohe Wendigkeit des Fahrzeugs, die der eines antriebsgelenkten kompakten Arbeitsgeräts überlegen ist, resultiert aus der Art der Radaufhängung. Das Arbeitsfahrzeug weist vier lenkbare Antriebsräder auf, die durch Portalachskonstruktionen aufgehängt sind und jeweils innerhalb eines Lenkeinschlagbereichs von 180° verschwenkbar sind, wobei die Stellung für die Geradeausfahrt die Mittelstellung ist, aus der heraus der Einschlag um + 90° möglich ist, wie in Fig. 2 veranschaulicht ist. Tatsächlich kann der Einschlagbereich 180° auch etwas überschreiten, beispielsweise 183° betragen.

Die Antriebe der einzelnen Räder können von einem zentralen Getriebe, von Getrieben, die jeweils zweien der Räder zugeordnet sind, oder auch einzeln abgeleitet sein. Die Antriebe erfolgen jeweils über eine im Portal vorhandene Welle, was zu einer wesentlich billigeren und raumsparenderen Konstruktion führt als beispielsweise die Verwendung von hydraulischen Radnabenmotoren.

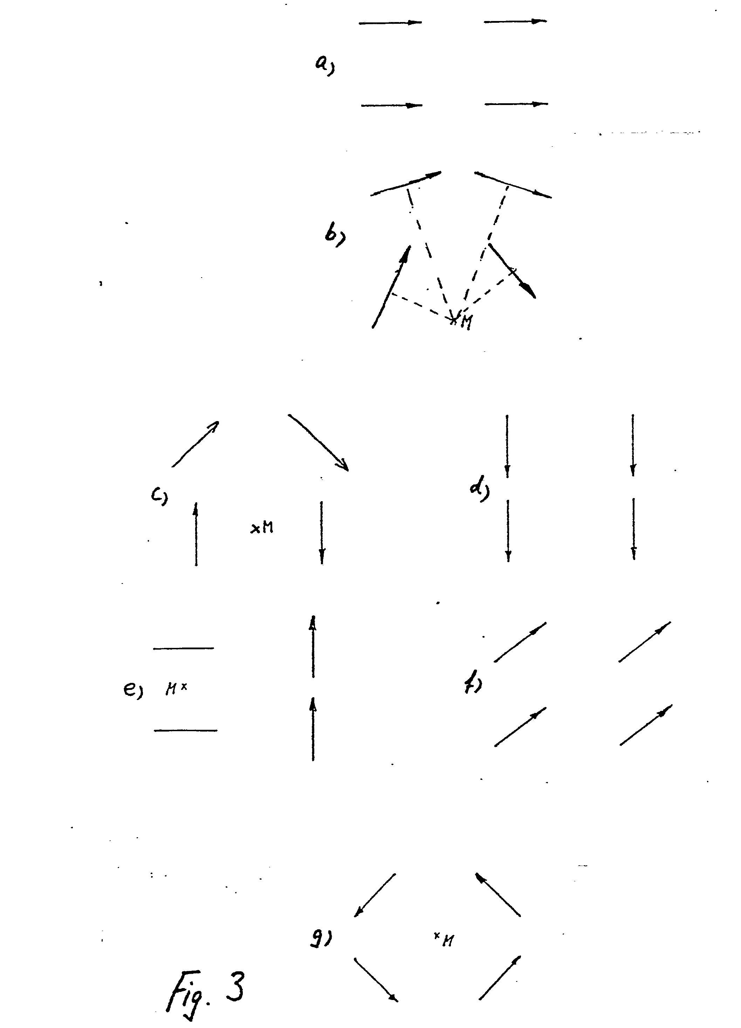

Fig. 3 veranschaulicht verschiedene Lenk- und Antriebsrichtungskonstellationen. In Fig. 3a ist die Geradeausfahrt veranschaulicht, in Fig. 3b die Radstellung beim Kurvenfahren um einen Mittelpunkt M, der bei noch stärkerem Radeinschlag gemäß Fig. 3c schließlich mit einer vertikalen Mittellinie einer Seitenwand zusammenfällt. Nach Fig. 3d sind alle Räder in ihre extreme Lenkstellung verbracht und sind zwei der Räder, nämlich entweder die Vorderräder 2 oder die Hinterräder 3, um 180° umgesteuert, so daß dann das Arbeitsgerät seitwärts fahren kann. Fig. 3e zeigt eine Konstellation, bei der nur zwei Räder antreiben, während die anderen beiden Räder als Laufräder betrieben werden und die Kurvenfahrt um einen zwischen den beiden Laufrädern liegenden Kurvenmittelpunkt M erfolgt. Fig. 3f zeigt die Möglichkeit des schrägen Fahrzeugversatzes, sofern hierfür eine Steuermöglichkeit vorgesehen ist. Voraussetzung für ein solches Manövrieren ist, daß die Antriebsrichtungen der jeweils auf einer Achse sitzenden Radpaare sich unabhängig voneinander steuern lassen. Eine unabhängige Steuerung von Antriebsrichtungen und Lenkstellungen ermöglicht auch die Konstellation nach Fig. 3g, die karussellartig ein Rotieren des Fahrzeugs um seine vertikale Mittelachse erlaubt. Die Konstellationen nach den Fig. 3f und 3g sind insbesondere möglich, wenn die Räder innerhalb ihres Einschlagbereichs beliebig festgelegt und dann mit beliebiger Antriebsrichtung angetrieben werden können.

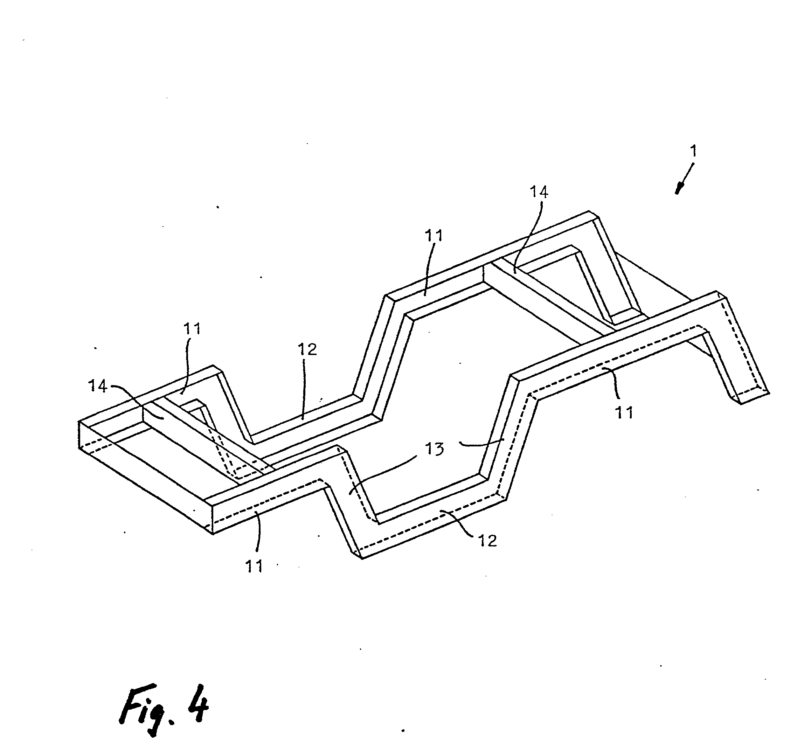

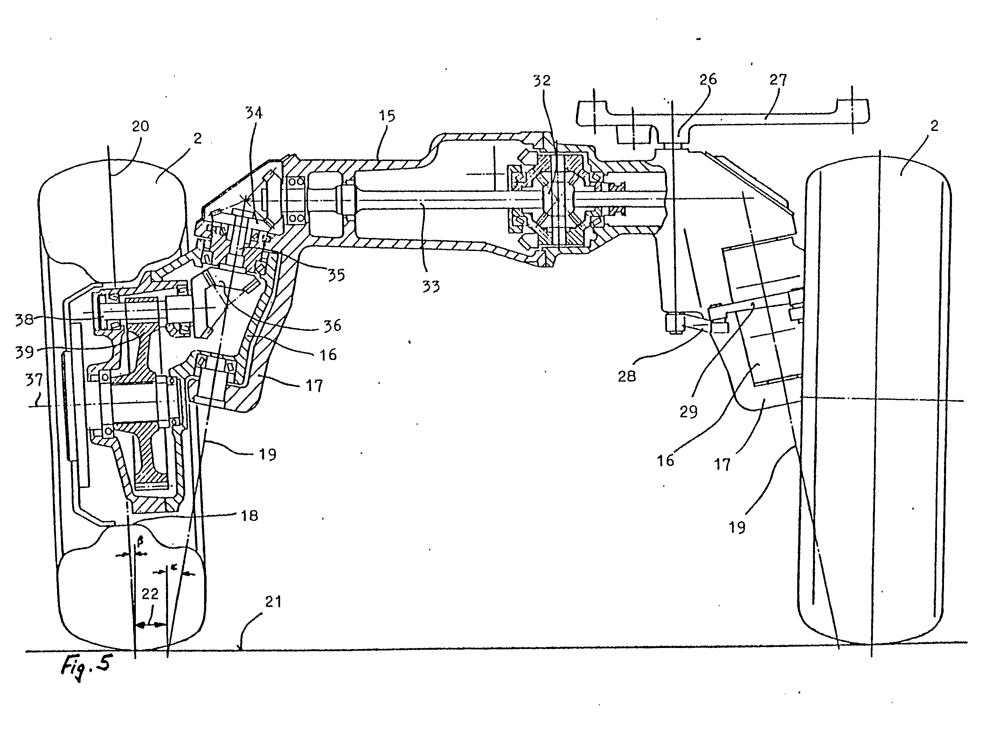

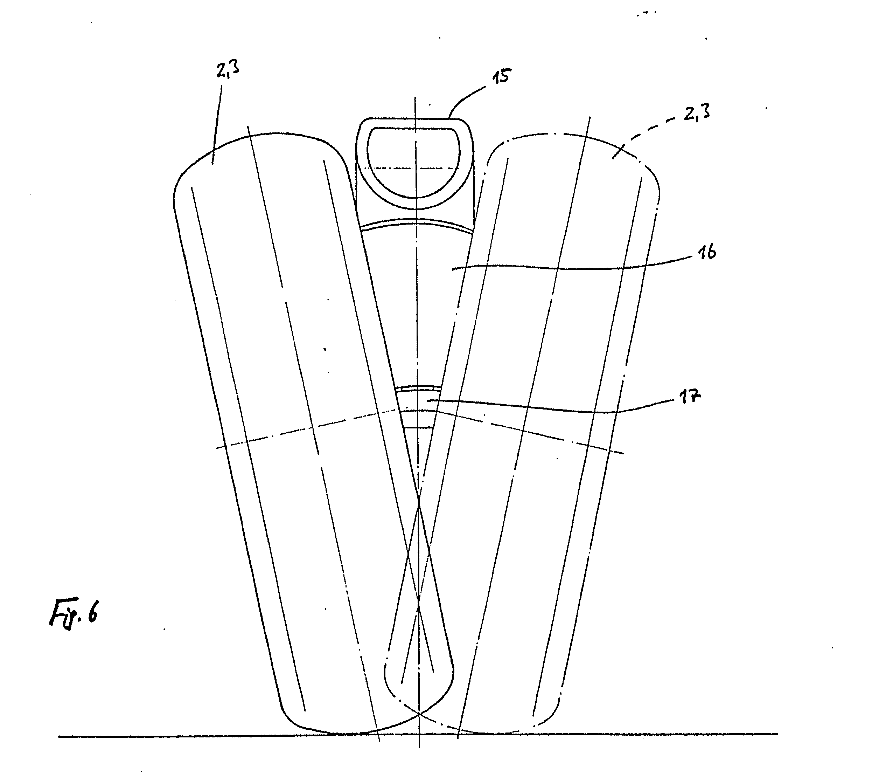

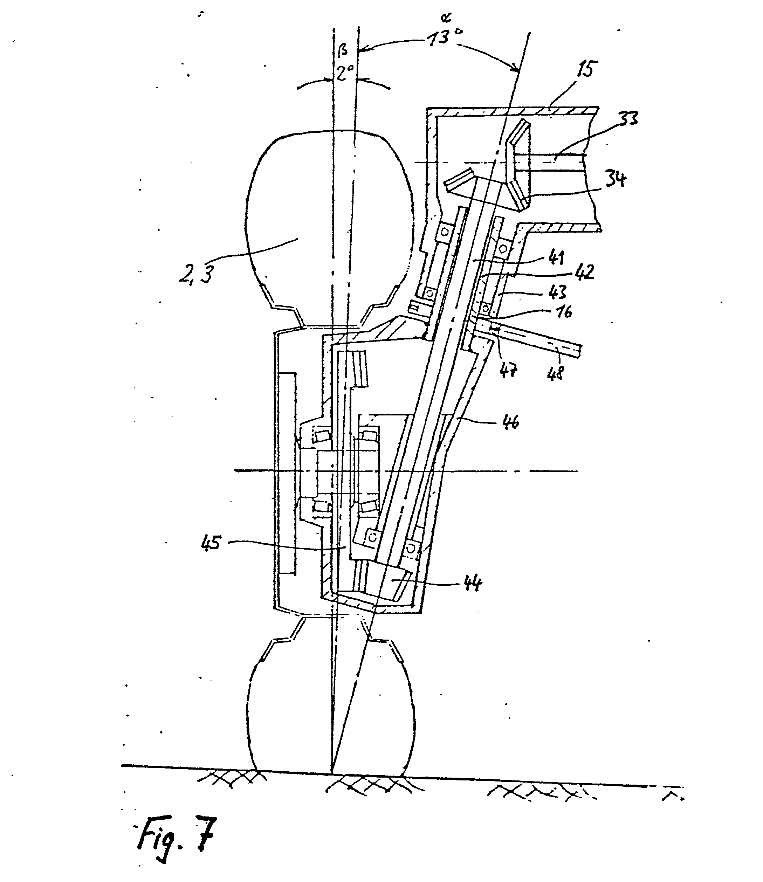

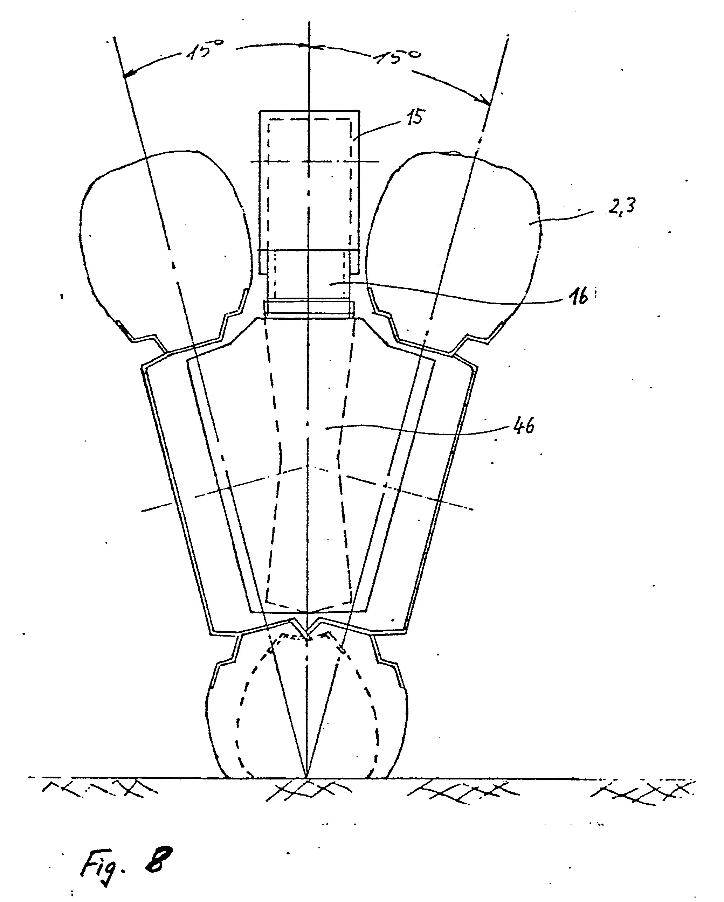

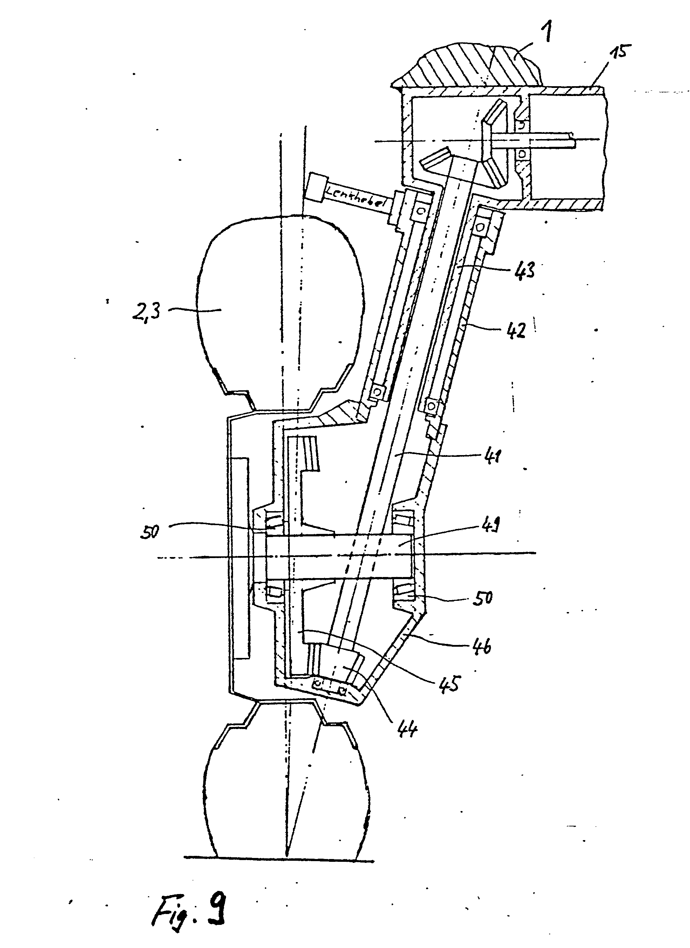

Fig. 4 zeigt in perspektivischer Darstellung den Rahmen 1, der als Portalrahmen ausgeführt ist. Er weist über den Rädern hochliegende Rahmenabschnitte 11 und im Bereich zwischen den Rädern tiefliegende Rahmenabschnitte 12 auf, zwischen denen ansteigende beziehungsweise abfallende Rahmenabschnitte 13 verlaufen. Zwischen den hochliegenden Rahmenabschnitten 11 verlaufen Traversen 14. Wie aus den Figuren 1, 2 und 4 ersichtlich ist, steht der Raum unter den hochliegenden Abschnitten 11 voll den Rädern und ihrem Schwenkbereich zur Verfügung. Dies erweist sich als erforderlich, da die Räder in ihren extremen Lenkstellungen einander in Richtung der Breite sehr nahe kommen, also, in Längsrichtung des Fahrzeugs gesehen, nur wenig freien Raum zwischen sich lassen.

Die tiefliegenden Rahmenabschnitte 12 bewirken insgesamt eine Erniedrigung des Schwerpunkts und ermöglichen eine günstige Fahrerplatzgestaltung, da der Fahrerplatz relativ niedrig, also nahe seinem Arbeitsfeld, liegt und über den Rahmenteil 12 einen sicheren und bequemen Zugang aufweist.

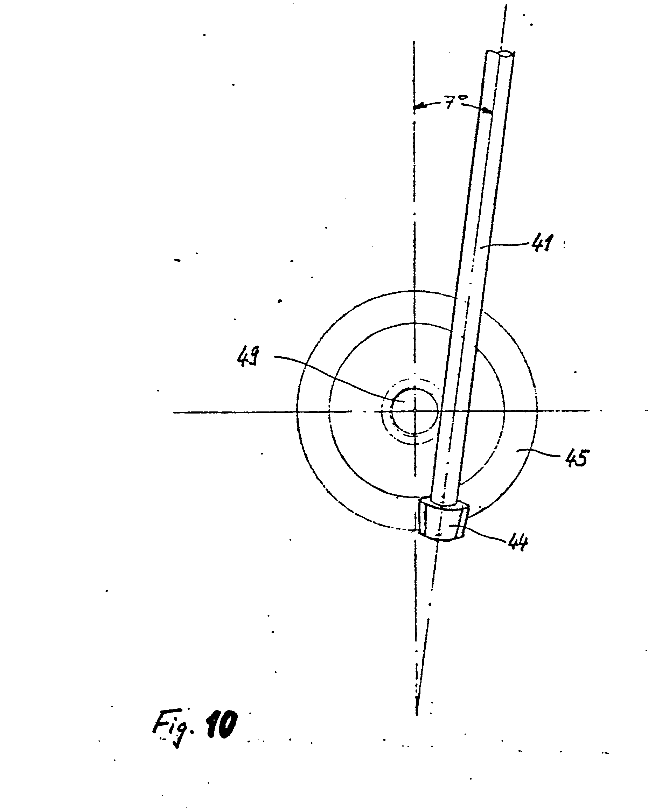

Fig. 5 zeigt am Beispiel einer in teilweise geschnittener Vorderansicht dargestellten Vorderachse die Achsportalkonstruktion. Sie besteht aus einem Achskörper 15 und darin verdrehbar gelagerten, schräg nach unten verlaufenden Radstützen 16, die selbst am eigentlichen Achskörper und an einem vom Achskörper nach unten abstehenden Stützbügel 17 gelagert sind und innerhalb der durch die Radfelge 18 gebildeten Schüssel das jeweilige Rad 2 lagern. Die Radstützen 16 weisen jeweils eine Längsachse 19 auf, die zugleich deren Verdrehungsachse ist und in der dargestellten Weise schräg verläuft. Die Längsachse 19 liegt beim beschriebenen Beispiel in der vertikalen Axialebene der Räder und weist gegen die Horizontale eine Neigung von 79°, also gegen das Lot einen Spreizungswinkel von 11° auf. Die radiale Mittelebene 20 des Rads 2 weist einen Sturz $\beta$ von 2° auf. Die Achse 19 und die Mittelebene 20 durchdringen den Untergrund 21 in der Reifenaufstandsfläche, jedoch dort nicht in einem Punkt. Vielmehr wird dort aus konstruktiven Gründen ein Lenkrollradius 22 in

Kauf genommen. Die Konstruktion ist jedoch so gewählt, daß dieser Lenkradius nicht so groß ist, dies würde auch eine Verschlechterung der Bodenfreiheit bedeuten.

Der Lenkverschwenkung der Räder 2 dient ein Lenkhebel 26, der Hebelarme 27 oberhalb des Achskörpers 15 und einen Hebelarm 28 unterhalb des Achskörpers 15 aufweist. Die Hebelarme 27 und 28 sind drehfest miteinander verbunden. An den Hebelarmen 27 greifen ein Lenkantrieb, insbesondere ein Hydraulikzylinder, und eine mit dem entsprechenden Hebelarm des anderen Rades dieser Achse verbundene (in der Zeichnung nicht sichtbare) Spurstange an, der Hebelarm 28 greift andererseits über eine Schwinge 29 unter Winkelübersetzung an der Radstütze 16 an, um diese zu verdrehen.

Mit Hilfe einer Verdrehung des Lenkhebels 26 um beispielsweise 90° kann eine Verdrehung der Radstütze 16 um 180° erzielt werden. Hierdurch wird das Rad vollkommen quergestellt, außerdem nimmt es eine Neigung gegen den Untergrund 21 in der Größenordnung von 77° beziehungsweise einen Sturz von 13° an, der aus dem Spreizungswinkel und dem Sturz bei Geradeausfahrt resultiert. Diese Schrägstellung hat für die Statik und für das Fahrverhalten bei Manövriergeschwindigkeiten keinen nachteiligen Einfluß, sie ist jedoch erforderlich, um zwischen den vom Rad 2 in den extremen Lenkstellungen beanspruchten Räumen einen Zwickel zu schaffen, in dem der Achskörper Platz hat, wie in Fig. 6 dargestellt ist.

Fig. 6 zeigt sehr deutlich, welch geringer Einbauraum bei Volleinschlag der Räder für die Gestaltung des Achskörpers und insbesondere der Achsgabel verbleibt. Die Verschwenkung um ± 90° ist möglich, da die Radstütze in den Innenraum der Felge hineingebaut worden ist.

Der Antrieb wird über ein Differentialgetriebe 32, eine Achswelle 33, ein erstes Kegelradgetriebe 34, eine Zwischenwelle 35, deren Drehachse mit der Längsachse der betreffenden Radstütze 16 zusammenfällt, und ein zweites Kegelradgetriebe 36 auf eine zur Drehachse 37 des Rads 2 parallele Ritzelwelle 38 übertragen, von wo aus er über ein Stirnradgetriebe 39 von hoher drehzahlerniedrigender Übersetzung auf die Radnabe übertragen wird. Im Bereich des Achskörpers und der Radstützen läuft der Antrieb also mit verhältnismäßig hoher Drehzahl und niedrigeren Kräften.

Bei Volleinschlag der Räder nähern sich diese im Bereich der Längsmittelebene des Fahrzeugs stark aneinander an. Der Raum unterhalb des Achsportals ist deshalb einerseits zur Erzielung einer hohen Bodenfreiheit, andererseits als Schwenkraum für die Räder frei. Insoweit stellt der Fahrzeugrahmen 1 also die untere Begrenzung der Aufbauten dar, und die Achskörper 15 sitzen an den Unterseiten der Traversen 14.

Auch die Konstruktion nach den Fig. 7 und 8 ermöglicht die Wendigkeit und hohe Bodenfreiheit. Das Rad ist an der Radstütze 16, die als Portalstütze bezeichnet werden kann, aufgehängt, die im wesentlichen aus drei zueinander koaxialen Teilen besteht, nämlich einer Antriebszwischenwelle 41, einer als zur Zwischenwelle 41 koaxiale Hohlwelle ausgebildeten Lenkwelle 42, die unabhängig von der Zwischenwelle 41 drehbar ist, und einer fest am Rahmen sitzenden Trägerkonstruktion 43. Die Trägerkonstruktion 43 ist im vorliegenden Fall gehäuseartig um die beiden Wellen 41 und 42 herum ausgeführt und verlängert sich oben im in Fahrzeugquerrichtung verlaufenden horizontalen Achskörper 15, in dem die vom Differentialgetriebe 32 hergeleitete Achswelle 33 untergebracht ist, die über das Kegelradgetriebe 34 die Zwischenwelle 41 antreibt.

Für den Antrieb gibt es verschiedene Möglichkeiten. Es kann z.B. von dem jeweils oberen Kegelradpaar eines Radantriebs eine Welle oder Gelenkwelle zu einem zentralen Getriebe führen. Es ist aber auch möglich, die beiden oberen Kegelräder der jeweils vorderen oder hinteren Räder über in den Achsköpern angeordnete Wellen miteinander zu verbinden, so daß sich ein ähnliches Antriebssystem wie bei herkömmlichen Fahrzeugen mit Achsen ergibt. Weiterhin ist denkbar, das Antriebssystem hydrostatisch auszuführen. Dabei können z.B. für die beiden vorderen und hinteren Räder je ein Motor und eine Pumpe verwendet werden. Es ist dann z.B. leicht möglich, bei Volleinschlag aller Räder die Räder einer Achse in der Drehrichtung umzukehren, was dann ein seitenversetzbares Fahren zur Folge hat.

Die übereinstimmende Rotationsachse der Zwischenwelle 41 und der Lenkwelle 42, also die Längsachse der Radstütze 16, ist bei dieser Ausführungsform gegen die Senkrechte um einen Spreizungswinkel von 13° geneigt und liegt in einer Ebene, die normal zur Radebene und zum Untergrund ist, also die Rotationsachse des Rades enthält. Die Längsachsen der Radstützen 16 der beiden Vorderräder 2 liegen also in einer ersten Ebene und die Längsachsen der Radstützen 16 der beiden Hinterräder 3 liegen in einer hierzu parallelen zweiten Ebene.

Das Rad 2 oder 3 selbst hat zur Senkrechten einen Sturzwinkel von 2°, so daß zwischen der Längsachse der Radstütze 16 und der Radebene ein Neigungswinkel von 15° liegt. Unter Ausnützung dieses Winkels ist das ein Enduntersetzungsgetriebe, das den Antrieb auf das Rad überträgt, innerhalb von dessen Felgenraum untergebracht. Dieses Enduntersetzungsgetriebe besteht aus einem auf der Zwischenwelle 41 sitzenden Kegelritzel 44 und einem hiermit kämmenden Tellerrad 45, das auf der Radachse verkeilt ist. Die Anordnung des Getriebes im unteren Teil eines Radachsengehäuses 46 läßt die Schmierung problemlos zu, jedoch ist der Kräfteverlauf und Raumbedarf weniger günstig als beim Stirntrieb nach Fig. 5.

Das Endübersetzungsgetriebe soll einen möglichst hohen Anteil des erforderlichen Untersetzungsverhältnisses soweit wie möglich zum Rad hin verlegen, um die kraftübertragenden Teile klein und leicht zu halten. Das Enduntersetzungsgetriebe soll aber andererseits nicht allzuweit aus der Radkontur herausragen, um die Bodenfreiheit nicht zu beeinträchtigen. Die Konstruktionsmaße, einschließlich des Winkels der Stütze, hängen also weitgehend vom im Felgenraum zur Verfügung stehenden Raum und somit von der Radgröße und Reifenbreite ab.

Mit der als Hohlwelle ausgebildeten Lenkwelle 42 ist, praktisch als seine Fortsetzung, das Radachsengehäuse 46 verschweißt, in dem das Rad gelagert ist und das gemeinsam mit dem Rad um die Längsachse der Radstütze 16 schwenkt, wenn die Lenkwelle 42 verdreht wird. Die Verdrehung der Lenkwelle 42 erfolgt beim beschriebenen Beispiel über einen Kettentrieb aus einem Kettenrad 47 und einer Kette 48.

Fig. 8 zeigt, in Richtung der Neigungsebene der Stütze 16 gesehen, die beiden extremen Lenkstellungen des Rads 2, 3, wobei das Rad zur Veranschaulichung der Teileanordnung in der Felgenschüssel geschnitten dargestellt ist. Tatsächlich kann das Rad 2, 3 natürlich zu einer Zeit nur eine der beiden dargestellten Stellungen einnehmen. Der Winkel zwischen der Stütze 16 und der Radebene wirkt sich in diesen Extremstellungen so aus, daß das Rad eine Neigung zur Vertikalen hat, die in seiner Extremstellung 15° beträgt. Diese Neigung ist noch nicht störend.

Wie Fig. 8 zeigt, verläuft zwischen den beiden Extremstellungen des Rads der Achskörper 15 und die Kette 48. Es ist also nicht erforderlich, daß der Achskörper oberhalb des oberen Radendes liegt. Sofern eine Lage noch im Bereich des oberen Radendes aus Gesichtspunkten der Bodenfreiheit ausreicht, ist zur stabilen Konstruktion der Achskörper 15 in dieser Lage sehr zweckmäßig.

In den Fig. 7 und 8 sind die Längsachse 19 der Radstütze 16 sowie der durch die Bodenaufstandsfläche des Rads verlaufende Rad-Durchmesser oder die radiale Mittelebene 20 eingezeichnet. Ersichtlich treffen sich diese Linien im Bereich der Bodenaufstandsfläche in einem Punkt, was zur Folge hat, daß der Lenkrollradius Null ist. Bei einer Lenkverstellung des Rads dreht sich dieses also um seinen Aufsitz, ohne gleichzeitig einen Weg zurückzulegen. Hierdurch ergibt sich ein besonders günstiges Lenkverhalten bei niedrigen Lenkkräften.

Ohne Änderung der Fig. 7 bzw. eines Endbereichs der Fig. 5 wäre die beschriebene Ausführung auch so abwandelbar, daß die Neigungsebene der Radstütze 16 nicht in Fahrzeugquerrichtung, sondern in Fahrzeuglängsrichtung liegt. Die Stellungen nach Fig. 6 und 8 wären dann die Stellungen für Geradeausfahrt, während die Stellungen nach Fig. 5 bzw. 7, also die Mittelstellung des Lenkeinschlags, die Stellung für den seitlichen Versatz wäre. Diese Ausführung könnte beispielsweise dann zu bevorzugen sein, wenn das als Achskörper 15 bezeichnete Gehäuse aus konstruktiven Gründen in Fahrzeuglängsrichtung an der Fahrzeugseite entlanglaufen soll. Indessen ergibt sich dann die Situation, daß für den normalen Fahrbetrieb die Räder die schräge Lage nach Fig. 6 bzw. 8 einnehmen, die zwar für Manövriervorgänge unbedenklich, für den regulären Fahrbetrieb indessen weniger empfehlenswert ist.

Wie insbesondere aus Fig. 7 ersichtlich ist, ist die Bodenfreiheit durch die Konstruktion der Endübersetzung nicht beeinträchtigt. Die schräg aufwärts verlaufende Radstütze, deren unteres Ende das Radachsengehäuse 46 ist, führt nicht zum Aufsitzen auf Bodenhindernisse und das Portal kommt in seiner ganzen Auswirkung zum Tragen.

Die Fig. 9 und 10 zeigen eine Konstruktion mit außenliegender Hohl-Lenkwelle. Die Konstruktion unterscheidet sich von derjenigen nach Fig. 5 insbesondere dadurch, daß die Längsachse der Radstütze 16 nicht in der senkrechten Durchmesserebene des Rades liegt, sondern gegen diese Ebene um einen kleinen Winkel, der beim beschriebenen Beispiel 7° beträgt, geneigt ist. Die Zwischenwelle 41 schneidet deshalb nicht die Verlängerung der Drehachse des Rades, sondern läuft an dieser vorbei. Diese Ausführung bietet den Vorteil, daß bei im unteren Teil des Radachsengehäuses 46 kämmenden Rädern 44, 45 doch eine sehr breite Lagerbasis für das Rad 2, 3 gewählt werden kann, da der Achsbolzen 49 die gesamte Breite des Radachsengehäuses 46 ausnützen kann und in seiner Länge nicht durch die Zwischenwelle 41 begrenzt ist. Er ist durch relativ weit auseinanderliegende Radlager 50 im Bereich der beiden Seitenwände des Radachsengehäuses 46 in diesem gelagert.

Der Lenkbetätigung, also gemäß Fig. 5 der Verstellung der Lenkhebel 26, dienen hydraulische Linearmotoren, wobei Konstruktionen mit einem Linearmotor je Rad, einem Linearmotor je Achse oder einem Linearmotor für das gesamte Fahrzeug und Weitergabe des Lenkantriebs über eine Spurstange in Frage kommen. Durch die Wahl der Ansteuerung der hydraulischen Linearmotoren läßt sich ein interessantes Betriebsverhalten bestimmen. Es wird davon ausgegangen, daß die beiderseitigen Kolbenanschläge im Linearmotor den um 180° gegeneinander versetzten Extremeinschlägen der Räder entsprechen. Die Zylinder der Linearmotoren sind so ausgeführt, daß sie hydraulisch ausgeglichen sind. Es wird dabei das Verdrängungsvolumen des Zylinders des ersten Linearmotors in den Zylinder des zweiten Linearmotors ausgestoßen und so fort, so daß sich ein Gleichlauf aller Linearmotoren ergibt. In den Kolbenendstellungen besitzen die Zylinder der Linearmotoren Synchronisierstellungen, also einen Überlauf, durch den eventuelle Ungleichmäßigkeiten, die sich durch unterschiedliche Leckagen der einzelnen Zylinderdichtungen ergeben könnten, ausgeglichen werden. Außerdem sind die Linearmotoren so konzipiert, daß diejenigen der Vorderräder 2 oder diejenigen der Hinterräder 3 aus der einen Extremstellung in die andere Extremstellung umgeschaltet werden können.

Diese Umsteuerung von einer Endstellung zur anderen dient der Schaffung der Voraussetzungen für den seitlichen Versatz des Fahrzeugs als Endstellung der Kreisfahrtlenkung, sofern nicht für zwei der Räder ein Umkehrgetriebe für die Antriebsrichtung vorhanden ist. Beim Programm der Schrägfahrt mit parallelgestellten Rädern ergibt sich als Endstellung ohnehin eine gemeinsame Antriebsrichtung aller Räder.

Ein Umkehrgetriebe, und zwar für die beiden Vorderräder 2 einerseits und die beiden Hinterräder 3 andererseits getrennt und unabhängig oder nur für die Vorderräder 2 oder die Hinterräder 3 ist konstruktiv nicht allzu aufwendig und dient der Schonung der Reifen und des Untergrunds, so daß es in mancher Hinsicht bevorzugenswert ist.

Eine programmierte Lenkung, bei der zur Vermeidung des Radierens die Radebenen stets tangential zum Kurvenradius stehen, ist in nicht speziell dargestellter Weise beispielsweise dadurch möglich, daß dem Lenkrad ein Getriebe nachgeschaltet ist, das beispielsweise mittels einer Untersetzung und einer oder mehrerer Nockenscheiben oder mit Hilfe eines Getriebes mit variabler Untersetzung, etwa mit ellipitschen Zahnrädern, oder auch durch entsprechend dimensionierte Hebelgestänge zwei hydraulische Kolben-Zylinder-Einheiten, also Linearpumpen, antreibt, von denen wiederum die eine den Linearmotor bzw. die Linearmotoren der Räder der linken Seite und die andere den Linearmotor bzw. die Linearmotoren der Räder der rechten Seite speist. Die Linearmotoren der Räder der linken und die der Räder der rechten Seite sind jeweils ausgeglichen, also in Reihe geschaltet, wobei eine Synchronisierung in der Endstellung oder in der Mittenstellung möglich ist. Das Nockenprofil ist so gestaltet, daß die den Linearmotoren der beiden Seiten eingespeisten Volumina unterschiedlich sind und zwar so, daß die geforderte Abstimmung der beiderseitigen Lenkeinschläge gewährleistet ist.

Eine bevorzugte Ausführung des Arbeitsgeräts sieht vor, daß einerseits vorne und andererseits hinten Achskörper die beiden Radstützen verbinden und einer der Achskörper, an dem starr die beiden Radstützen hängen, pendelnd aufgehängt ist, was eine bessere Bodenhaftung ergibt. Wie erläutert, ist der Achskörper mit der Radstütze, die den Portaltrieb in Form eines Kegeltriebs enthält, höhenmäßig unterhalb der Radorberkante angeordnet, was aufgrund der schrägen Radstütze und der Begrenzung des Lenkeinschlags auf 180° mit dem resultierenden Freiraum (Fig. 6, 8) möglich ist.

Im Sinne der Kompaktheit des Arbeitsgeräts ist der Antriebsmotor seitlich neben dem Fahrer angeordnet, und zwar rechts oder links. Hierbei ist die Längsachse des Motors, also die Achse der Kurbelwelle, angenähert 90° zur Fahrzeuglängsachse angeordnet und der Motor befindet sich im mittleren Drittel des Radstands, also des Zwischenraums zwischen den Vorderrädern und den Hinterrädern, so daß die Kurbelwellenachse unterhalb der Radorberkante angeordnet werden kann, ohne daß hierdurch der Radeinschlag begrenzt wird. Das Bodenblech, also die Fußaufstandsfläche für den Fahrer, befindet sich oberhalb der Verlängerung der Kurbelwellenachse. Hierdurch erhält man einen relativ niedrigen Motor und Fahrzeugschwerpunkt und eine kompakte Bauweise, während doch gleichzeitig die Bodenfreiheit mit beispielsweise 400 mm noch sehr hoch ist.

**Patentansprüche**

1. Arbeitsfahrzeug mit vier lenk- und antriebbaren Rädern (2, 3), die an einer Portalachse an der Unterseite eines Rahmens (1) aufgehängt und bezüglich ihrer in der Geradeausfahrt eingenommenen Mittenstellung um etwa ± 90 Winkelgrade verschwenkbar sind und mit einem im Rahmen (1) aufgenommen Motor, gekennzeichnet durch die folgenden Merkmale:

a) der Rahmen (1) ist in Portalbauweise ausgeführt, wobei über den Rädern (2, 3) hochliegende Rahmenabschnitte (11) mit im Fahrtrichtung gesehen zwischen den Rädern (2, 3) angeordneten tierfliegenden Rahmenabschnitten (12) über schräg ansteigende bzw. abfallende Rahmenabschnitte (13) verbunden sind.

b) Die Achskörper (15) sind, in vertikaler Richtung gesehen, zwischen der Unterkante der hochliegende Rahmenabschnitte (11) und der Radmitte angeordnet.

c) Der Abstand zwischen den Radachsen beträgt wenigstens das 1,5 -fache des Raddurchmessers, bei einer Gesamtlänge des Fahrzeugs ohne Arbeitsgerät von etwa dem 3-fachen des Raddurchmesser.

d) Der Motor ist über den tiefliegenden Rahmenabschnitte (12) angeordnet, so daß die Kurbelwellenachse quer zur Fahrzeuglängsrichtung und in einer Höhe unterhalb der Radorberkante verläuft.

e) Ein Ausleger für ein Arbeitsgerät ist auf der dem Einstieg in das Fahrerhaus (4) gegenüberliegenden Seite des Fahrzeugs, hinter (bei 6) dem Fahrerhaus (4) angelenkt, angeordnet.

2. Arbeitsfahrzeug nach Anspruch 1, dadurch gekennzeichnet, daß eine Radstütze (16) aus dem innerhalb der Radfelge liegenden Bereich heraus nach oben geführt ist.

3. Arbeitsfahrzeug nach Anspruch 2, dadurch gekennzeichnet, daß die Verlängerung der Längsachse (19) der Radstütze (16) durch die Bodenaufstandsfläche des betreffenden Rads (2, 3) verläuft.

4. Arbeitsfahrzeug nach Anspruch 2 oder 3 dadurch gekennzeichnet, daß der Spreizwinkel der Längsachse der Radstütze (16) zur Vertikalen zwischen 10° und 16° liegt und die Räder (2, 3) einen Sturz in der Größenordnung von 2° aufweisen.

5. Arbeitsfahrzeug nach einem der Ansprüche 1 bis 4, gekennzeichnet durch einen programmierten Antrieb der Lenkeinrichtungen in Abhängigkeit von den Schwenkwinkeln so, daß sich die Räder (2, 3) tangential zur resultierenden Kurve stellen.

6. Arbeitsfahrzeug nach einem der Ansprüche 1 bis 5, dadurch gekennzeichnet, daß die Radstützen (16) mit zum betreffenden Radlager führenden Lenkwellen (42) versehen sind und an jeder der Lenkwellen zur Lenkverstellung ein hydraulisch bewegbares Lenkgestänge (26) angreift.

7. Arbeitsfahrzeug nach Anspruch 6, dadurch gekennzeichnet, daß die Lenkgestänge mit hydraulischen Linearmotoren verbunden sind, daß sämtliche Linearmotoren hydraulisch ausgeglichen und hintereinandergeschaltet sind und daß sie in ihrer jeweils einen Endstellung einen Synchronisier-Überlauf für das Hydraulikmedium aufweisen.

8. Arbeitsfahrzeug nach Anspruch 7, dadurch gekennzeichnet, daß für den Fall, daß die Vorderräder (2) und die Hinterräder (3) durch getrennte Linearmotoren lenkbare Antriebsräder sind, in die von Linearmotor zu Linearmotor verlaufende Speiseleitung zwischen jeweils zwei Linearmotoren oder Paare von Linearmotoren, nämlich zwischen die der Vorderräder und die der Hinterräder, ein Umsteuerventil eingeschaltet ist, das in der einen Endstellung aller Linearmotoren dazu betätigbar ist, für einen der Linearmotoren oder eines der Paare von Linearmotoren, nämlich für die Vorderräder (2) oder die Hinterräder (3), eine Umsteuerung von deren Lenkwellen um 180° einzusteuern.

9. Arbeitsfahrzeug nach einem der Ansprüche 1 bis 5, dadurch gekennzeichnet, daß die Radstützen (16) mit zum betreffenden Radlager führenden Lenkwellen (42) versehen sind und jede der Lenkwellen ein koaxiales Kettenrad (47) aufweist, an dem zur Lenkverstellung eine Kette (48) angreift.

10. Arbeitsfahrzeug nach Anspruch 9 dadurch gekennzeichnet, daß an jeder Lenkwelle (42) ein Lenkhebel (26) angreift.

11. Arbeitsfahrzeug nach Anspruch 10, dadurch gekennzeichnet, daß der Lenkhebel (26) mit einer Übersetzung (28, 29) an der Lenkwelle angreift.

12. Arbeitsfahrzeug nach Anspruch 10 oder 11, dadurch gekennzeichnet, daß der Lenkhebel (26) teils über und teils unter dem Achskörper (15) angeordnet ist.

13. Arbeitsfahrzeug nach einem der Ansprüche 1 bis 12, dadurch gekennzeichnet, daß der Raum unterhalb der Achskörper (15), gegebenenfalls mit Ausnahme von Lenkhebelteilen (28), frei ist.

14. Arbeitsfahrzeug nach einem der Ansprüche 1 bis 13, dadurch gekennzeichnet, daß in der um 90° verschwenkten Querlenkstellung der Räder (2, 3) deren innerste Teile von den beiden Seiten her bis in den Bereich der vertikalen Längsmittelebene des Klein-Arbeitsfahrzeugs reichen.

15. Arbeitsfahrzeug nach Anspruch 14, dadurch gekennzeichnet, daß sich in der um 90° verschwenkten Querlenkstellung der Räder (2, 3) diese, bezogen auf ihren gemeinsamen Achskörper (15), gegenüberliegen.

16. Arbeitsfahrzeug nach Anspruch 15, dadurch gekennzeichnet, daß sich in der um 90° verschwenkten Querlenkstellung der Räder (2, 3) Teile von diesen, bezogen auf die Gegenüberlage am Achskörper (15), überlappen.

17. Arbeitsfahrzeug nach Anspruch dadurch gekennzeichnet, daß ein den Fahrersitz umgebendes Fahrerhaus (4) eine so weit heruntergezogene Frontscheibe (7) hat, daß eine gerade Sichtlinie von der Augposition des Fahrers zu einer vor den Vorderrädern angekuppelten Arbeitsvorrichtung (5) durch die Frontscheibe verläuft.

18. Arbeitsfahrzeug nach Anspruch 17, dadurch gekennzeichnet, daß als im Fahrerhaus (4) angeordnetes Lenkbetätigungsgerät eine Lenkstange (8) dient.

**Claims**

1. Working vehicle comprising four steerable and drivable wheels (2, 3) which are suspended from a portal axle at the underside of a frame (1) and may be pivoted by about +/- 90 angular degrees relative to their neutral position adopted on straight run, and further comprising an engine received within the frame (1), characterized by the following features:

a)
Said frame (1) is designed in portal construction wherein high-level frame sections (11) located above said wheels (2, 3) are connected with deep-level frame sections (12) arranged between said wheels (2, 3) with respect to the direction of motion via frame sections (13) which are angularly ascending or sloping, respectively.

b)
The bodies of axles (15) are arranged, with respect to the vertical direction, between the bottom edge of the high-level frame sections (11) and the wheel centre.

c)
The distance between the wheel axles is at least the one-and-a-half-fold of the wheel diameter, the whole length of the vehicle without working equipment being about the threefold of the wheel diameter.

d)
Said engine is arranged above said deep-level frame sections (12) such that the crankshaft axle extends at right angles to the longitudinal direction of the vehicle and at a level below the wheel top edge.

e) A cantilever for a working device is arranged on the side of the vehicle facing the entry into the driver's cab (4), thereby being pivoted behind (at 6) said driver's cab (4).

2. Working vehicle of claim 1, characterized in that a wheel support (16) is guided upwards out of the area inside the wheel rim.

3. Working vehicle of claim 2, characterized in that the extension of the longitudinal axis (19) of said wheel support (16) passes through the floor contact area of the respective wheel (2, 3).

4. Working vehicle of claim 2 or 3, characterized in that the spreader angle of the longitudinal axis of the wheel support (16) is at a range between 10° and 16° with the vertical and said wheels (2, 3) have a camber in the order of 2°.

5. Working vehicle of any of claims 1 to 4, characterized by a programmed actuation of the steering means in dependence on the pivoting angles such that said wheels set themselves to be tangential to the resulting curve.

6. Working vehicle of any of claims 1 to 5, characterized in that said wheel support (16) are provided with steering shafts (42) passing to the respective wheel bearing and a hydraulically movable steering linkage (26) acts on each of said steering shafts so as to adjust steering.

7. Working vehicle of claim 6 characterized that said steering linkages are connected with hydraulical linear motors, that all the linear motors are hydraulically balanced and arranged in series and that they have each in their one end position a synchronisation overflow for the hydraulic medium.

8. Working vehicle of claim 7, characterized in that, for the case of the fore-wheels (2) and the rear-wheels (3) being driving wheels steerable by separate linear motors, a reverse valve is arranged in the feed line, passing from linear motor to linear motor, between in each case two linear motors or pairs of linear motors, namely between these of said fore-wheels (2) and these of said rear-wheels (3), wherein said reverse valve may be actuated in the one end position of all the linear motors in order to control a reverse steering of said steering shafts by 180° for one of said linear motors or a pair of said linear motors, namely for said fore-wheels (2) and said rear-wheels (3).

9. Working vehicle of any of claims 1 to 5, characterized in that said wheel supports (16) are provided with steering shafts (42) passing to the respective wheel bearing and each of said steering shafts includes a co-axial chain wheel (47) on which a chain (48) acts for steering adjustment.

10. Working vehicle of claim 9, characterized in that a steering lever (26) acts on each steering shaft (42).

11. Working vehicle of claim 10, characterized in that said steering lever acts through a transmission (28, 29) on said steering shaft.

12. Working vehicle of claim 10 or 11, characterized in that said steering lever is arranged in part above and in part below said body of axle (15).

13. Working vehicle of any of claims 1 to 12, characterized in that the space below said axle bodies (15) is free, except for steering lever members (28) if applicable.

14. Working vehicle of any of claims 1 to 13, characterized in that the innermost parts of said wheels (2, 3) in the transverse steering position pivoted by 90° extend from both sides up to the area of the vertical, longitudinal centre plane of said vehicle.

15. Working vehicle of any of claims 1 to 14, characterized in that said wheels (2,3) in the transverse steering position pivoted by 90° are facing each other in relation to their common axle body (15).

16. Working vehicle of claim 15, characterized in that parts of said wheels (2, 3) in the transverse steering position interlace each other in relation to the faced position at said axle body (15).

17. Working vehicle of any of claims 1 to 16, characterized in that a driver's cab (4) surrounding the driver-seat includes a front pane (7) picked down such that a straight line of sight passes from the driver's eye position to a working device (5) mounted in front of said fore-wheels through said front pane.

18. Working vehicle of claim 17, characterized in that a steering rod (18) serves as steering actuation means arranged in said driver's cab (4).

**Revendications**

1. Véhicule de travail muni de quatre roues orientables et pouvant être entraînées (2, 3) qui sont suspendues à un essieu de portique au côté inférieur d'un châssis (1) et peuvent dévier d'environ + 90° relativement à leur position moyenne occupée lors de la marche en ligne droite et d'un moteur logé dans le châssis (1), caractérisé par les particularités suivantes :

a) le châssis (1) est exécuté avec une construction en portique, des parties de châssis (11) placées haut au-dessus des roues (2, 3) étant reliées à des parties de châssis (12) placées bas, disposées entre les roues (2, 3) vues dans la direction de la marche, par l'intermédiaire de parties de châssis (13) montant ou descendant obliquement,

b) les corps d'essieu (15), vus en direction verticale, sont disposés entre le bord inférieur des parties de châssis placées haut (11) et le centre de la roue,

c) l'espacement entre les essieux de roues représente au moins 1,5 fois le diamètre de la roue, pour une longueur totale du véhicule, sans instrument de travail, d'environ 3 fois le diamètre des roues,

d) le moteur est disposé au-dessus des parties de châssis placées bas (12), de sorte que l'axe du vilebrequin est dirigé transversalement à la direction longitudinale du véhicule et à une hauteur inférieure au bord supérieur des roues,

e) une flèche destinée à un instrument de travail est disposée sur le côté du véhicule qui est opposé à l'accès de la cabine de conducteur (4) et articulée derrière la cabine de conducteur (9) (en 6).

2. Véhicule selon la revendication 1, caractérisé en ce qu'un appui de roues (16) se dirige, de la région située a l'intérieur de la jante de roue, vers le haut.

3. Véhicule selon la revendication 2, caractérisé en ce que le prolongement de l'axe longitudinal (19) de l'appui de roues (16) passe par la surface d'appui au sol de la roue considérée (2, 3).

4. Véhicule selon l'une des revendications 2 et 3, caractérisé en ce que l'angle d'écartement de l'axe longitudinal de l'appui de roue (16) avec la verticale se situe entre 10° et 16°, et en ce que les roues (2, 3) présentent un carrossage de l'ordre de grandeur de 2°.

5. Véhicule selon l'une des revendications 1 à 4, caractérisé par un entraînement programmé des dispositifs de direction sous la dépendance des angles de pivotement, de sorte que les roues (2, 3) se placent tangentiellement à la courbe résultante.

6. Véhicule selon l'une des revendications 1 à 5, caractérisé en ce que les appuis de roue (16) sont munis d'arbres de direction conduisant au palier de roue considéré, et en ce qu'à chacun des arbres de direction s'applique, pour le réglage d'orientation, un tringlage de direction (26) pouvant être déplacé hydrauliquement.

7. Véhicule selon la revendication 6, caractérisé en ce que les tringlages de direction sont reliés à des moteurs linéaires hydrauliques, en ce que tous les moteurs linéaires sont compensés hydrauliquement et branchés à la suite les uns des autres, et en ce qu'ils présentent chacun dans l'une de leurs positions extrêmes un débordement de synchronisation pour le fluide hydraulique.

8. Véhicule selon la revendication 7, caractérisé en ce que, pour le cas où les roues avant (2) et les roues arrière (3) sont des roues motrices pouvant être orientées par des moteurs linéaires séparés, dans le tuyau d'alimentation allant d'un moteur linéaire à l'autre est interposée, chaque fois entre deux moteurs linéaires ou paires de moteurs linéaires, à savoir entre ceux ces roues avant et ceux des roues arrière, une valve de renversement qui dans l'une des positions extrêmes de tous les moteurs linéaires, peut être actionnée de manière à commander, pour l'un des moteurs linéaires ou l'une des paires de moteurs lineaires, à savoir pour les roues avant (2) ou les roues arrière (3), un renversement de 180° de leurs arbres de direction.

9. Véhicule selon l'une des revendications 1 à 5, caractérisé en ce que les appuis de roue (16) sont munis d'arbres de direction (42) conduisant au palier de roue considéré, et en ce que chacun des arbres de direction présente une roue à chaîne coaxiale (47) à laquelle s'applique pour le réglage de direction, une chaîne (48).

10. Véhicule selon la revendication 9, caractérisé en ce qu'à chaque arbre de direction (42) s'applique un levier de direction (26).

11. Véhicule selon la revendication 10, caractérisé en ce que le levier de direction (26) s'applique à l'arbre de direction avec une démultiplication (28, 29).

12. Véhicule selon l'une des revendications 10 et 11, caractérisé en ce que le levier de direction (26) est disposé en partie au-dessus et en partie en dessous du corps d'essieu (15).

13. Véhicule selon l'une des revendications 1 et 12, caractérisé en ce que l'espace situé en dessous du corps d'essieu (15) est libre, à l'exception de parties de levier de direction (28).

14. Véhicule selon l'une des revendications 1 à 13, caractérisé en ce que lorsque les roues (2, 3) sont dans la position transversale déviée à 90°, leurs parties les plus intérieures arrivent, depuis les deux côtés, jusque dans la région du plan médian longitudinal vertical du véhicule de travail.

15. Véhicule selon la revendication 14, caractérisé en ce que dans la position transversale de direction des roues (2, 3), déviée de 90°, les roues, relativement à leur corps d'essieu commun (15), sont face à face.

16. Véhicule selon la revendication 15, caractérisé en ce que dans la position transversale de direction des roues (2, 3), deviées de 90°, des parties de celles-ci se chevauchent relativement à la position opposée sur le corps d'essieu (15).

17. Véhicule selon l'une des revendications 1 à 16, caractérisé en ce qu'une cabine de conducteur (4) entourant le siège de conducteur présente un pare-brise (7) descendant dans une mesure telle qu'une ligne droite de visée, de la position des yeux du conducteur à un dispositif de travail (5) accouple devant les roues avant, passe par le pare-brise.

18. Véhicule selon la revendication 17, caracterisé en ce que le dispositif d'actionnement de direction disposé dans la cabine de conducteur (4) est un tringlage de direction (8).

*Fig. 1*

*Fig. 2*

1

Fig. 3

3

Fig. 4

Fig. 5

0110415

Fig. 6

Fig. 7

Fig. 8

*Fig. 9*

Fig. 10